# EUROPEAN PATENT APPLICATION

(11) **EP 4 765 749 A1**
(43) Date of publication of application: **24.06.2026**
(21) Application number: 24866832.9
(22) Date of filing: 17.04.2024
(51) Int. Cl.: H04L 27/26

(54) **COMMUNICATION METHOD, COMMUNICATION APPARATUS, AND STORAGE MEDIUM**

(30) Priority: 22.09.2023 CN 202311240900
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/088214
(87) International publication number: WO 2025/060407

(57) **Abstract**

Provided are a communication method, a communication apparatus, and a storage medium. The communication method comprises: acquiring a first data sequence to be transmitted and a first reference sequence; adding a cyclic prefix sequence and a cyclic suffix sequence to the first reference sequence to obtain a second reference sequence; placing the last part of the second reference sequence before the first data sequence, and placing the first part of the second reference sequence after the first data sequence to obtain a second data sequence; processing the second data sequence to obtain a third data sequence; and sending the third data sequence.

## Description

The present disclosure claims priority to Chinese Patent Application No. 202311240900.9, filed on September 22, 2023, the entire content of which is incorporated into the present disclosure by reference.

### TECHNICAL FIELD

The present disclosure relates to the technical field of communications, and in particular, to a communication method, a communication apparatus, and a storage medium.

### BACKGROUND

The fifth-generation mobile communication technology (5th-generation wireless systems, 5G) supports mobile enhanced bandwidth, low latency, high reliability, and massive machine-type communication connectivity services, such as augmented reality (AR)/virtual reality (VR), factory automation, transportation scenarios including remote driving, and distributed power system control. 5G New Radio (NR) may be configured therein with flexible demodulation parameters, to meet different requirements for demodulation reference signals in different service scenarios. In some business scenarios, a relatively large symbol overhead of demodulation reference signals is required to meet demodulation accuracy requirements.

### SUMMARY

In a first aspect, the embodiments of the present disclosure provide a communication method. The communication method includes:
acquiring a first data sequence to be transmitted and a first reference sequence;
adding a cyclic prefix sequence and a cyclic suffix sequence to the first reference sequence, to obtain a second reference sequence;
placing a latter part of the second reference sequence before the first data sequence, and placing a former part of the second reference sequence after the first data sequence, to obtain a second data sequence;
processing the second data sequence, to obtain a third data sequence; and sending the third data sequence.

In a second aspect, the embodiments of the present disclosure provide another communication method. The communication method includes:
acquiring a first data sequence to be transmitted and a first reference sequence;
adding a cyclic suffix sequence before the first data sequence, and adding a cyclic prefix sequence and the first reference sequence in sequence after the first data sequence, to obtain a second data sequence, where the cyclic prefix sequence and the cyclic suffix sequence are determined based on the first reference sequence;
processing the second data sequence, to obtain a third data sequence; and
sending the third data sequence.

In a third aspect, the embodiments of the present disclosure provide a communication apparatus. The communication apparatus includes: a receiving module, a processing module, and a sending module, where
the receiving module is configured to acquire a first data sequence to be transmitted and a first reference sequence;
the processing module is configured to add a cyclic prefix sequence and a cyclic suffix sequence to the first reference sequence, to obtain a second reference sequence;
the processing module is further configured to place a latter part of the second reference sequence before the first data sequence, and place a former part of the second reference sequence after the first data sequence, to obtain a second data sequence;
the processing module is further configured to process the second data sequence, to obtain a third data sequence; and
the sending module is configured to send the third data sequence.

In a fourth aspect, the embodiments of the present disclosure provide another communication apparatus. The communication apparatus includes: a receiving module, a processing module, and a sending module, where
the receiving module is configured to acquire a first data sequence to be transmitted and a first reference sequence;
the processing module is further configured to add a cyclic suffix sequence before the first data sequence, and add a cyclic prefix sequence and the first reference sequence in sequence after the first data sequence, to obtain a second data sequence, where the cyclic prefix sequence and the cyclic suffix sequence are determined based on the first reference sequence;
the processing module is further configured to process the second data sequence, to obtain a third data sequence; and
the sending module is configured to send the third data sequence.

In a fifth aspect, the embodiments of the present disclosure provide a communication apparatus. The communication apparatus includes: a memory and a processor, where the memory is coupled to the processor, the memory is configured to store instructions executable by the processor, and the processor, upon executing the instructions, performs any method provided in the first aspect or the second aspect.

In a sixth aspect, the embodiments of the present disclosure provide a computer program product including computer instructions that, upon being run on a computer, enable the computer to perform any method provided in the first aspect or the second aspect.

### BRIEF DESCRIPTION OF THE DRAWINGS

The accompanying drawings are used to provide a further understanding of technical solutions of the present disclosure, and constitute a part of the specification; and the accompanying drawings are to explain the technical solutions of the present disclosure together with the embodiments of the present disclosure, and do not constitute a limitation on the technical solutions of the present disclosure.
FIG. 1 is a schematic diagram of a communication system according to some embodiments.
FIG. 2 is a schematic diagram of a flowchart of a communication method according to some embodiments.
FIG. 3 is a schematic diagram of the composition of a second reference sequence according to some embodiments.
FIG. 4A is a schematic diagram of the composition of a second data sequence according to some embodiments.
FIG. 4B is a schematic diagram of the composition of another second data sequence according to some embodiments.
FIG. 4C is a schematic diagram of the composition of yet another second data sequence according to some embodiments.
FIG. 5 is a schematic diagram of the composition of a time domain symbol according to some embodiments.
FIG. 6 is a schematic diagram of the composition of another time domain symbol according to some embodiments.
FIG. 7 is a schematic diagram of the composition of yet another time domain symbol according to some embodiments.
FIG. 8 is a schematic diagram of the composition of a time slot according to some embodiments.
FIG. 9A is a schematic diagram of a data processing process according to some embodiments.
FIG. 9B is a schematic diagram of another data processing process according to some embodiments.
FIG. 10 is a schematic diagram of a time window according to some embodiments.
FIG. 11 is a schematic diagram of yet another data processing process according to some embodiments.
FIG. 12 is a schematic diagram of a flowchart of another communication method according to some embodiments.
FIG. 13 is a schematic diagram of the composition of a communication apparatus according to some embodiments.
FIG. 14 is a schematic diagram of the composition of another communication apparatus according to some embodiments.
FIG. 15 is a schematic diagram of the structure of a communication apparatus according to some embodiments.

### DETAILED DESCRIPTION

The technical solutions in the embodiments of the present disclosure will be described clearly and completely below, in conjunction with the accompanying drawings of the embodiments of the present disclosure. Obviously, the described embodiments are merely a part of the embodiments of the present disclosure, but not all of the embodiments. All other embodiments obtained based on the embodiments of the present disclosure by an ordinary person of those skilled in the art without paying any creative effort shall be included in the protection scope of the present disclosure.

In the description of the present disclosure, unless otherwise specified, "/" denotes "or," for example, "A/B" may represent either A or B. The term "and/or" herein merely describes an association relationship between objects, indicating that three relationships may exist. For example, A and/or B may represent: only A, only B, or both A and B. In addition, "at least one" refers to one or more, and "multiple/plurality of" refers to two or more. Expressions such as "first" and "second" do not limit the quantity/number or execution order, nor do they necessarily imply distinction.

It will be noted that in the present disclosure, expressions such as "exemplary/exemplarily" or "for example" are used to indicate example, illustration, or explanation. Any embodiment or design scheme described with "exemplary/exemplarily" or "for example" in the present disclosure should not be interpreted as being preferred or advantageous over other embodiments or design schemes. Rather, the usage of the expressions such as "exemplary/exemplarily" or "for example," is intended to present relevant concepts in a detailed manner.

At present, in some high-speed mobile scenarios, it is possible to require more time domain symbols in a data channel to send demodulation reference signals, so as to improve demodulation accuracy and reduce the impact of high-speed movement on the demodulation accuracy. As a result, the overhead of demodulation reference signals increases, which then reduces the system spectral efficiency, and leads to insufficient system throughput, resulting in a poor user experience. Therefore, how to transmit data in a way that avoids the excessive overhead of demodulation reference signal symbols limiting the improvement of the spectral efficiency is an urgent problem to be solved.

In view of this, embodiments of the present disclosure provide a communication method, and the method includes: acquiring a first data sequence to be transmitted and a first reference sequence; adding a cyclic prefix (CP) sequence and a cyclic suffix (CS) sequence to the first reference sequence, to obtain a second reference sequence; placing a latter part of the second reference sequence before the first data sequence, and placing a former part of the second reference sequence after the first data sequence, to obtain a second data sequence; processing the second data sequence, to obtain a third data sequence; and sending the third data sequence

In this way, in two adjacent orthogonal frequency-division multiplexing (OFDM) symbols, a tail of the former symbol and a head of the latter symbol may form a complete second time domain reference sequence, which may improve the update speed of channel estimation parameters and the accuracy of channel estimation in high-speed mobile scenarios.

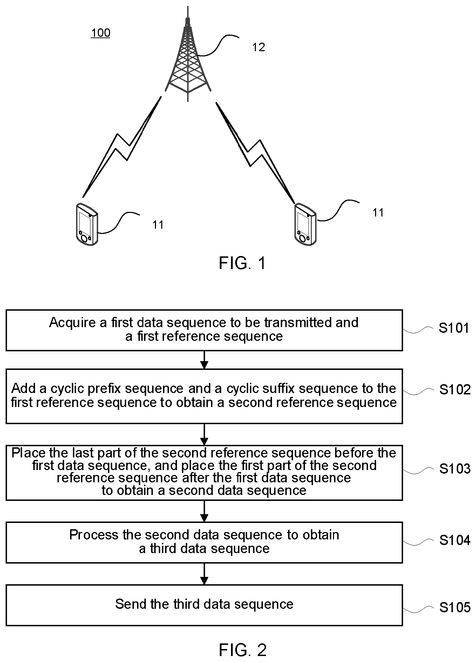

The method provided in the embodiments of the present disclosure may be applied to various communication systems, for example, the communication system may be a long-term evolution (LTE) system, a 5th generation (5G) communication system, a Wi-Fi system, a 3rd generation partnership project (3GPP)-related communication system, a future-evolved communication system (such as a 6th generation (6G) communication system), or a system integrating multiple systems, without limitation. The method provided in the embodiments of the present disclosure is described below using a communication system 100 shown in FIG. 1 as an example. FIG. 1 is merely a schematic diagram and does not constitute a limitation on applicable scenarios of the technical solutions provided in the present disclosure.

FIG. 1 is a schematic diagram of an architecture of a communication system according to some embodiments. As shown in FIG. 1, the communication system 100 may include one or more network devices 12 and one or more terminal devices 11. A terminal device 11 may communicate with one or more network devices 12.

In some embodiments, the network device 12 may be used to implement functions such as resource scheduling, wireless resource management, and wireless access control for terminal devices. For example, the network device 12 may be an evolution base station (evolution nodeB, eNB), a next generation base station (generation nodeB, gNB), a receiving and transmitting point (transmission receive point, TRP), a transmission point (TP), or a certain type of other access node. According to a size of a service coverage area provided, base stations may be classified into macro base stations for providing macro cells (Macro cell), pico base stations for providing pico cells (Pico cell), and femto base stations for providing femto cells (Femto cell). With the continuous evolution of wireless communication technologies, other names may be adopted for future base stations.

The terminal device 11 may also be referred to as a terminal, a user equipment (UE), a mobile station, or a mobile terminal. Exemplarily, the terminal 11 may be a mobile phone, a tablet computer, a computer with a wireless transceiving function, a virtual reality terminal, an augmented reality terminal, a wireless terminal in industrial control, a wireless terminal in self driving, a wireless terminal in remote surgery, a wireless terminal in transportation safety, a wireless terminal in a smart city, a wireless terminal in a smart home, or the like. The embodiments of the present disclosure do not limit a device form adopted by the terminal.

In some embodiments, during the communication process, a network device sends data to a terminal device, and a terminal device receives the data sent by the network device. Thus, the network device may be referred to as a sending end, and accordingly, the terminal device may be referred to as a receiving end. Alternatively, a terminal device sends data to a network device, so the network device may be referred to as a receiving end, and accordingly, the terminal device may be referred to as a sending end.

It will be noted that FIG. 1 is merely an exemplary framework diagram. The number of devices or nodes depicted in FIG. 1, as well as names of various devices, are not limited, and in addition to the functional nodes shown in FIG. 1, the communication system may further include other nodes or devices (such as a core network device).

The system architecture and business scenarios described in the embodiments of the present disclosure are intended to illustrate the technical solutions of the embodiments more clearly and do not constitute limitations on the technical solutions provided in the embodiments of the present disclosure. A person of ordinary skill in the art may appreciate that, with the evolution of network architectures and the emergence of new service scenarios, the technical solutions provided in the embodiments of the present disclosure are also applicable to similar technical problems.

The embodiments provided in the present disclosure is described in detail below in conjunction with the accompanying drawings.

As shown in FIG. 2, the embodiments of the present disclosure provide a communication method, and the method includes the following steps (S101 to S105).

In S101, a first data sequence to be transmitted and a first reference sequence are acquired.

The first reference sequence is a reference signal sequence in this communication process, where the reference signal sequence is used for performing channel estimation, coherent detection, and demodulation by a receiving end, so that the receiving end may correctly demodulate data sent by a sending end.

A reference signal is a signal used for performing operations, such as channel estimation, channel measurement, time synchronization, or frequency synchronization, by the receiving end. The reference signal may be sent from the sending end to the receiving end, and the reference signal is a signal known to both the sending end and the receiving end. Exemplarily, the reference signal provided in the embodiments of the present disclosure may include a demodulation reference signal (DMRS), a sounding reference signal (SRS), or a channel state information-reference signal (CSI-RS).

In S102, a cyclic prefix sequence and a cyclic suffix sequence are added to the first reference sequence, to obtain a second reference sequence.

In some embodiments, the sending end may determine the cyclic prefix sequence and the cyclic suffix sequence in the first reference sequence.

In some embodiments, the cyclic prefix sequence may include a tail end of the first reference sequence, and the cyclic suffix sequence may include a head end of the first reference sequence. Furthermore, a length of the cyclic prefix sequence is greater than or equal to a length of the cyclic suffix sequence.

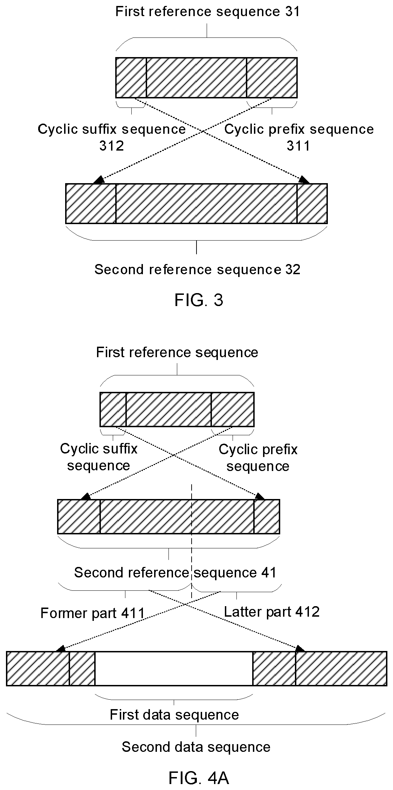

Exemplarily, the sending end may extract a partial sequence from a tail of the first reference sequence as the cyclic prefix sequence, and extract a partial sequence from a head of the first reference sequence as the cyclic suffix sequence. As shown in FIG. 3, in a first reference sequence 31, the sending end may extract a partial sequence at the tail as a cyclic prefix sequence 311, and extract a partial sequence at the head as a cyclic suffix sequence 312. In one example, a length of the cyclic prefix sequence 311 is greater than a length of the cyclic suffix sequence 312.

In some embodiments, the sending end may add the cyclic prefix sequence and the cyclic suffix sequence to the first reference sequence, to obtain the second reference sequence.

Exemplarily, the sending end may place the cyclic prefix sequence before the first reference sequence, and place the cyclic suffix sequence after the first reference sequence, and then use a combined sequence of the cyclic prefix sequence, the first reference sequence and the cyclic suffix sequence as the second reference sequence.

Exemplarily, as shown in FIG. 3, a second reference sequence 32 includes the cyclic prefix sequence 311, the first reference sequence 31, and the cyclic suffix sequence 312, furthermore, the cyclic prefix sequence 311 precedes the first reference sequence 31, and the cyclic suffix sequence 312 follows the first reference sequence 31.

It will be noted that during processing, the cyclic prefix CP and the cyclic suffix CS may be added to the head and tail of the first reference sequence, respectively, so that there is cyclic protection data at both the beginning and ending of the first reference sequence, thereby reducing interference from adjacent data, and suppressing multipath effects, so as to facilitate channel estimation based on the first reference sequence.

In S103, a latter part of the second reference sequence is placed before the first data sequence, and a former part of the second reference sequence is placed after the first data sequence, to obtain a second data sequence.

In some embodiments, the sending end may divide the second reference sequence into two parts, including the former part and the latter part. It should be understood that since the second reference sequence is obtained by adding the cyclic prefix sequence and the cyclic suffix sequence to the first reference sequence, the former part of the second reference sequence includes the cyclic prefix sequence and a former part of the first reference sequence, and the latter part of the second reference sequence includes a latter part of the first reference sequence and the cyclic suffix sequence.

In some embodiments, a length of the former part of the second reference sequence is greater than or equal to a length of the latter part of the second reference sequence.

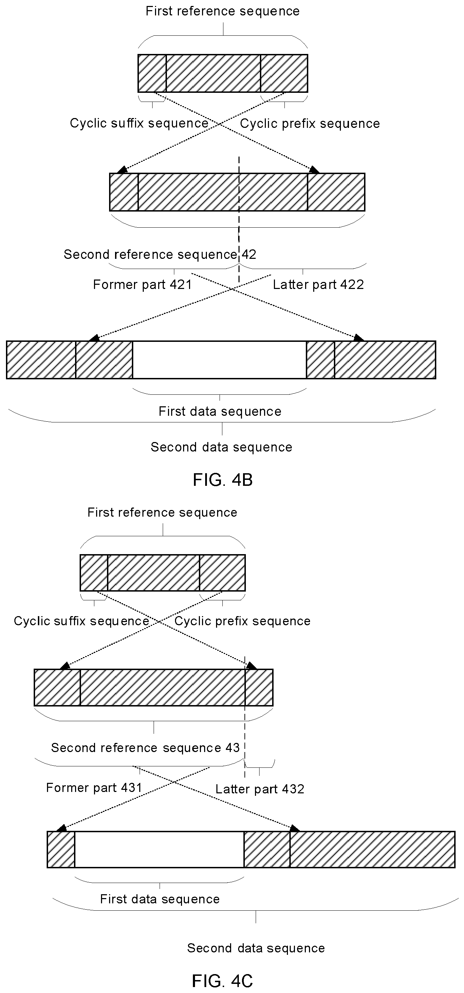

Exemplarily, as shown in FIG. 4A, a second reference sequence 41 includes a former part 411 and a latter part 412. As can be seen from FIG. 4A, a length of the former part 411 is greater than a length of the latter part 412. Furthermore, in FIG. 4A, the length of the cyclic prefix sequence is greater than the length of the cyclic suffix sequence. Alternatively, as shown in FIG. 4B, a second reference sequence 42 includes a former part 421 and a latter part 422. As can be seen from FIG. 4B, a length of the former part 421 is equal to a length of the latter part 422. Furthermore, in FIG. 4B, the length of the cyclic prefix sequence is greater than the length of the cyclic suffix sequence.

In some embodiments, the length of the former part of the second reference sequence is positively correlated with the length of the cyclic prefix sequence. That is, the longer the length of the cyclic prefix sequence, the longer the length of the former part of the second reference sequence; conversely, the shorter the length of the cyclic suffix sequence, the shorter the length of the former part of the second reference sequence.

In some embodiments, the former part of the second reference sequence includes the cyclic prefix sequence and the first reference sequence, and the latter part of the second reference sequence includes the cyclic suffix sequence. Exemplarily, as shown in FIG. 4C, a second reference sequence 43 includes a former part 431 and a latter part 432. As can be seen from FIG. 4C, the former part 431 includes the cyclic prefix sequence and the second reference sequence 43, and the latter part 432 includes the cyclic suffix sequence. Furthermore, a length of the former part 431 is greater than a length of the latter part 432.

Furthermore, the sending end may place the latter part of the second reference sequence before the first data sequence, and place the former part of the second reference sequence after the first data sequence, to obtain the second data sequence. Exemplarily, as shown in FIG. 4A, FIG. 4B or FIG. 4C, the sending end may use a combined sequence of the former part of the second reference sequence, the first data sequence, and the latter part of the second reference sequence as the second data sequence.

In some embodiments, a sum of a length of the second reference sequence and a length of the first data sequence is equal to a length of a time domain symbol. That is, a length of the second data sequence is equal to a length of a time domain symbol, and the second data sequence is a data sequence carried in the time domain symbol.

Exemplarily, the time domain symbol may be an orthogonal frequency-division multiplexing (OFDM) symbol. The OFDM is a multi-carrier transmission technology, which utilizes a large number of orthogonal subcarriers (SC) adjacent to each other, with each subcarrier modulated using modulation techniques such as BPSK and QAM. Based on its high-speed transmission capability, this technology may effectively counteract frequency-selective fading.

In one example, in a first time domain symbol and a second time domain symbol that are adjacent, a first reference sequence carried in the first time domain symbol is the same as a first reference sequence carried in the second time domain symbol, a head-end element of a second data sequence carried in the first time domain symbol is the same as a head-end element of a second data sequence carried in the second time domain symbol, and a tail-end element of the second data sequence carried in the first time domain symbol is the same as a tail-end element of the second data sequence carried in the second time domain symbol.

In some embodiments, a length of a cyclic prefix sequence carried in the first time domain symbol is equal to a length of a cyclic prefix sequence carried in the second time domain symbol, and a length of a cyclic suffix sequence carried in the first time domain symbol is equal to a length of a cyclic suffix sequence carried in the second time domain symbol.

It will be noted that in the first time domain symbol and the second time domain symbol that are adjacent, the first reference sequence carried in the first time domain symbol is the same as the first reference sequence carried in the second time domain symbol, as well as in the first time domain symbol and the second time domain symbol, the cyclic prefix sequences are the same, and the cyclic suffix sequences are also the same. Therefore, a second reference sequence determined by the first time domain symbol based on the first reference sequence, the cyclic prefix sequence, and the cyclic suffix sequence is also the same as a second reference sequence determined by the second time domain symbol based on the first reference sequence, the cyclic prefix sequence, and the cyclic suffix sequence.

Furthermore, the second data sequence is obtained from the latter part of the second reference sequence, the first data sequence and the former part of the second reference sequence, and the second reference sequence in the first time domain symbol is the same as the second reference sequence in the second time domain symbol. Therefore, the latter part of the second reference sequence in the first time domain symbol is the same as the latter part of the second reference sequence in the second time domain symbol, that is, the head-end element of the second data sequence carried in the first time domain symbol is the same as the head-end element of the second data sequence carried in the second time domain symbol; and the former part of the second reference sequence in the first time domain symbol is the same as the former part of the second reference sequence in the second time domain symbol, that is, the tail-end element of the second data sequence carried in the first time domain symbol is the same as the tail-end element of the second data sequence carried in the second time domain symbol.

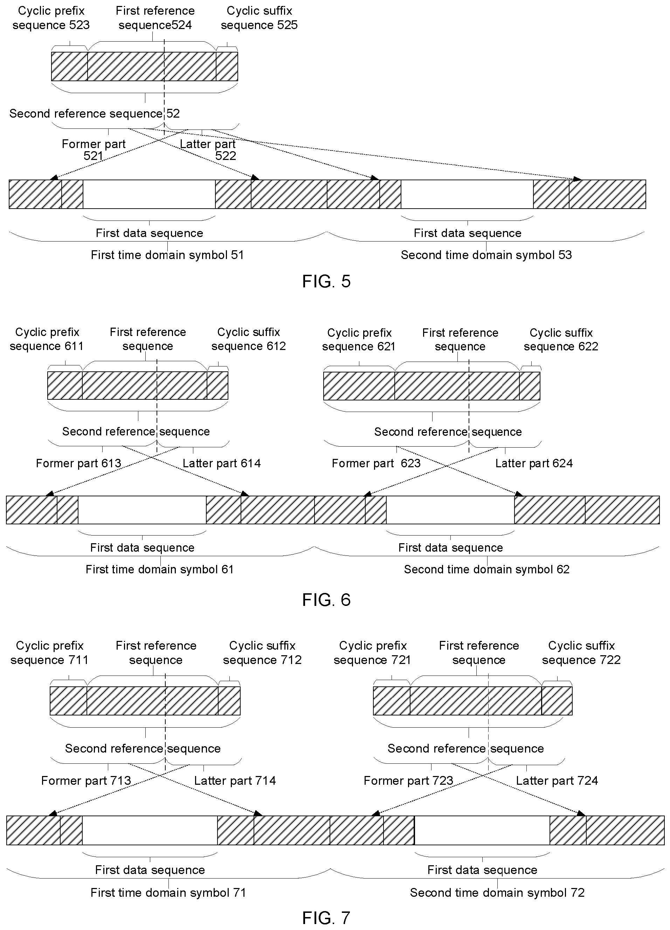

Exemplarily, as shown in FIG. 5, a first time domain symbol 51 carries a latter part 522 of a second reference sequence 52, the first data sequence, and a former part 521 of the second reference sequence 52. Furthermore, the second reference sequence 52 carries a cyclic prefix sequence 523, a first reference sequence 524, and a cyclic suffix sequence 525. In a case where the first reference sequence carried in the first time domain symbol is the same as the first reference sequence carried in the second time domain symbol, a head of the second data sequence carried in a second time domain symbol 53 in FIG. 5 is obtained from the latter part 522 of the second reference sequence 52, that is, a head-end element of the second data sequence carried in the second time domain symbol 53 is the same as a head-end element of the second data sequence carried in the first time domain symbol 51. Furthermore, a tail of the second data sequence carried in the second time domain symbol 53 in FIG. 5 is obtained from the former part 521 of the second reference sequence 52, that is, a tail-end element of the second data sequence carried in the second time domain symbol 53 is the same as a tail-end element of the second data sequence carried in the first time domain symbol 51.

In another example, in a first time domain symbol and a second time domain symbol that are adjacent, a first reference sequence carried in the first time domain symbol is the same as a first reference sequence carried in the second time domain symbol, and a second reference sequence carried in the first time domain symbol is different from a second reference sequence carried in the second time domain symbol.

In some embodiments, a length of a cyclic prefix sequence carried in the first time domain symbol is unequal to a length of a cyclic prefix sequence carried in the second time domain symbol, and/or a length of a cyclic suffix sequence carried in the first time domain symbol is unequal to a length of a cyclic suffix sequence carried in the second time domain symbol.

It will be noted that in a case where the first reference sequence carried in the first time domain symbol is the same as the first reference sequence carried in the second time domain symbol, and the length of the cyclic prefix sequence carried in the first time domain symbol is unequal to the length of the cyclic prefix sequence carried in the second time domain symbol, a former part of the second reference symbol carried in the first time domain symbol is different from a former part of the second reference symbol carried in the second time domain symbol, that is, the second reference sequence carried in the first time domain symbol is different from the second reference sequence carried in the second time domain symbol. Alternatively, in a case where the length of the cyclic suffix sequence carried in the first time domain symbol is unequal to the length of the cyclic suffix sequence carried in the second time domain symbol, a latter part of the second reference symbol carried in the first time domain symbol is different from a latter part of the second reference sequence carried in the second time domain symbol, that is, the second reference sequence carried in the first time domain symbol is different from the second reference sequence carried in the second time domain symbol.

In some embodiments, a tail-end element of a second data sequence carried in the first time domain symbol is the same as a tail-end element of a second data sequence carried in the second time domain symbol, and a head-end element of the second data sequence carried in the first time domain symbol is the same as a head-end element of the second data sequence carried in the second time domain symbol.

Example 1: the length of the cyclic prefix sequence carried in the first time domain symbol is unequal to the length of the cyclic prefix sequence carried in the second time domain symbol. As shown in FIG. 6, a length of a cyclic prefix sequence 611 carried in a first time domain symbol 61 is less than a length of a cyclic prefix sequence 621 carried in a second time domain symbol 62, and a length of a cyclic suffix sequence 612 carried in the first time domain symbol 61 is equal to a length of a cyclic suffix sequence 622 carried in the second time domain symbol 62. Therefore, a former part 613 of a second reference sequence carried in the first time domain symbol 61 is different from a former part 623 of a second reference sequence carried in the second time domain symbol 62, that is, the second reference sequence carried in the first time domain symbol 61 is different from the second reference sequence carried in the second time domain symbol 62.

In some embodiments, a partial sequence of a first reference sequence included in the former part 613 of the second reference sequence carried in the first time domain symbol 61 is the same as a partial sequence of a first reference sequence included in the former part 623 of the second reference sequence carried in the second time domain symbol 62. In this case, a head-end element of the former part 613 is different from a head-end element of the former part 623, but tail-end elements thereof are the same. Therefore, the tail-end element of the second data sequence carried in the first time domain symbol 61 is the same as the tail-end element of the second data sequence carried in the second time domain symbol 62. Furthermore, the latter part 614 of the second reference sequence carried in the first time domain symbol 61 is the same as the latter part 624 of the second reference sequence carried in the second time domain symbol 62. Therefore, the head-end element of the second data sequence carried in the first time domain symbol 61 is the same as the head-end element of the second data sequence carried in the second time domain symbol 62.

Example 2: the length of the cyclic suffix sequence carried in the first time domain symbol is unequal to the length of the cyclic suffix sequence carried in the second time domain symbol. As shown in FIG. 7, a length of a cyclic prefix sequence 711 carried in a first time domain symbol 71 is equal to a length of a cyclic prefix sequence 721 carried in a second time domain symbol 72, and a length of a cyclic suffix sequence 712 carried in the first time domain symbol 71 is less than a length of a cyclic suffix sequence 722 carried in the second time domain symbol 72. Therefore, a latter part 714 of a second reference sequence carried in the first time domain symbol 71 is different from a latter part 724 of a second reference sequence carried in the second time domain symbol 72, that is, the second reference sequence carried in the first time domain symbol 71 is different from the second reference sequence carried in the second time domain symbol 72.

In some embodiments, a partial sequence of a first reference sequence included in the latter part 714 of the second reference sequence carried in the first time domain symbol 71 is the same as a partial sequence of a first reference sequence included in the latter part 724 of the second reference sequence carried in the second time domain symbol 72. In this case, a tail-end element of the latter part 714 is different from a tail-end element of the latter part 724, but head-end elements thereof are the same. Therefore, the head-end element of the second data sequence carried in the first time domain symbol 71 is the same as the head-end element of the second data sequence carried in the second time domain symbol 72. Furthermore, the former part 713 of the second reference sequence carried in the first time domain symbol 71 is the same as the former part 723 of the second reference sequence carried in the second time domain symbol 72. Therefore, the tail-end element of the second data sequence carried in the first time domain symbol 71 is the same as the tail-end element of the second data sequence carried in the second time domain symbol 72.

Example 3: the length of the cyclic prefix sequence in the first time domain symbol is unequal to the length of the cyclic prefix sequence in the second time domain symbol, and the length of the cyclic suffix sequence in the first time domain symbol is also unequal to the length of the cyclic suffix sequence in the second time domain symbol. Therefore, the second reference sequence carried in the first time domain symbol is different from the second reference sequence carried in the second time domain symbol.

In some embodiments, first reference sequences carried in all time domain symbols within a time slot are the same, head-end elements of second data sequences carried in all time domain symbols within the time slot are the same, and tail-end elements of the second data sequences carried in all time domain symbols are the same.

In some embodiments, in a first time slot and a second time slot that are adjacent, a first reference sequence carried in each time domain symbol in the first time slot is the same as a first reference sequence carried in each time domain symbol in the second time slot, and a second reference sequence carried in each time domain symbol in the first time slot is different from a second reference sequence carried in each time domain symbol in the second time slot.

In some embodiments, a length of a cyclic prefix sequence carried in each time domain symbol in the first time slot is unequal to a length of a cyclic prefix sequence carried in each time domain symbol in the second time slot, and/or a length of a cyclic suffix sequence carried in each time domain symbol in the first time slot is unequal to a length of a cyclic suffix sequence carried in each time domain symbol in the second time slot.

It will be noted that in a case where the first reference sequence carried in each time domain symbol in the first time slot is the same as the first reference sequence carried in each time domain symbol in the second time slot, and the length of the cyclic prefix sequence in each time domain symbol in the first time slot is unequal to the length of the cyclic prefix sequence in each time domain symbol in the second time slot, a former part of the second reference symbol in each time domain symbol in the first time slot is different from a former part of the second reference symbol in each time domain symbol in the second time slot, that is, the second reference sequence carried in each time domain symbol in the first time slot is different from the second reference sequence carried in each time domain symbol in the second time slot. Alternatively, in a case where the length of the cyclic suffix sequence in each time domain symbol in the first time slot is unequal to the length of the cyclic suffix sequence in each time domain symbol in the second time slot, a latter part of the second reference symbol in each time domain symbol in the first time slot is different from a latter part of the second reference symbol in each time domain symbol in the second time slot, that is, the second reference sequence carried in each time domain symbol in the first time slot is different from the second reference sequence carried in each time domain symbol in the second time slot.

In some embodiments, a tail-end element of a second data sequence carried in each time domain symbol in the first time slot is the same as a tail-end element of a second data sequence carried in each time domain symbol in the second time slot, and a head-end element of the second data sequence carried in each time domain symbol in the first time slot is the same as a head-end element of the second data sequence carried in each time domain symbol in the second time slot.

It will be noted that first reference sequences of adjacent time domain symbols are the same, and in second data sequences of adjacent time domain symbols, head-end elements are the same and tail-end elements are also the same. In this way, in two adjacent time domain symbols, a tail of the former time domain symbol may serve as a cyclic prefix of the latter time domain symbol. Therefore, there is no need to add a new cyclic prefix for each symbol, so an interval between adjacent time domain symbols is equal to the reciprocal of a subcarrier spacing, which may improve spectral efficiency.

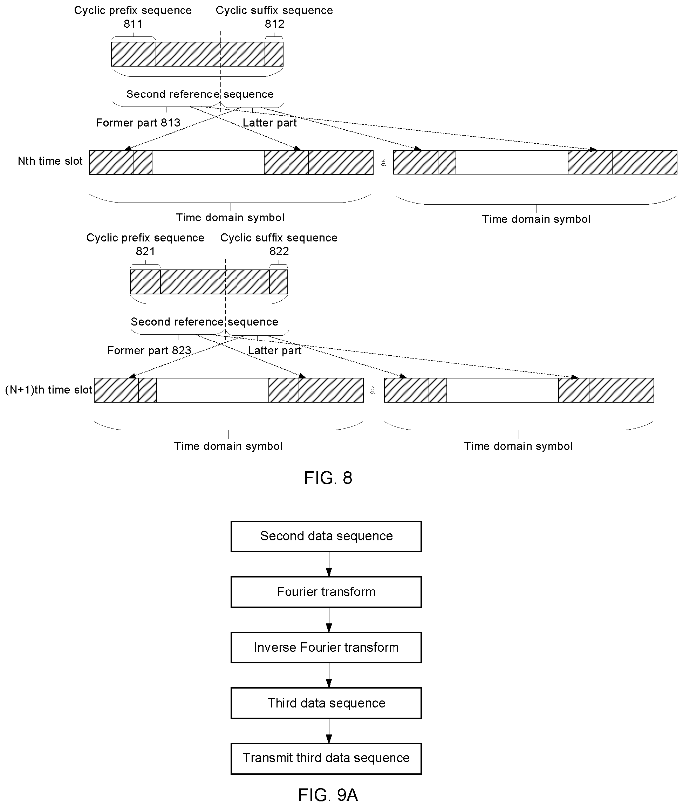

Exemplarily, as shown in FIG. 8, in an Nth time slot and an (N+1)th time slot that are adjacent, a length of a cyclic prefix sequence 811 of each time domain symbol in the Nth time slot is greater than a length of a cyclic prefix sequence 821 of each time domain symbol in the (N+1)th time slot, and a length of a cyclic suffix sequence 812 of each time domain symbol in the Nth time slot is equal to a length of a cyclic suffix sequence 822 of each time domain symbol in the (N+1)th time slot. Therefore, a former part 813 of a second reference sequence in each time domain symbol in the Nth time slot is different from a former part 823 of a second reference sequence in each time domain symbol in the (N+1)th time slot, that is, the second reference sequence carried in each time domain symbol in the Nth time slot is different from the second reference sequence carried in each time domain symbol in the (N+1)th time slot. In some embodiments, a tail-end element of an (N+1)th data sequence carried in each time domain symbol in the Nth time slot is the same as a tail-end element of an (N+1)th data sequence carried in each time domain symbol in the (N+1)th time slot, and a head-end element of the (N+1)th data sequence carried in each time domain symbol in the Nth time slot is the same as a head-end element of the (N+1)th data sequence carried in each time domain symbol in the (N+1)th time slot.

In S104, the second data sequence is processed, to obtain a third data sequence.

In some embodiments, a time length of the third data sequence is equal to a time length of the second data sequence.

In one implementation, the sending end may perform Fourier transform (FT) processing and inverse Fourier transform (IFT) processing on the second data sequence, to obtain the third data sequence.

Exemplarily, as shown in FIG. 9A, after having determined the second data sequence, the sending end may first perform Fourier transform processing on the second data sequence, such as fast Fourier transform (FFT) processing or discrete Fourier transform (DFT) processing, so as to perform time domain to frequency domain transform analysis on the second data sequence. Furthermore, the sending end performs inverse Fourier transform processing on the second data sequence processed by the Fourier transform, such as an inverse fast Fourier transform (IFFT) or an inverse discrete Fourier transform (IDFT), to obtain time domain data reconstructed from the frequency domain, that is, the third data sequence. Furthermore, the sending end may transmit the obtained third data sequence.

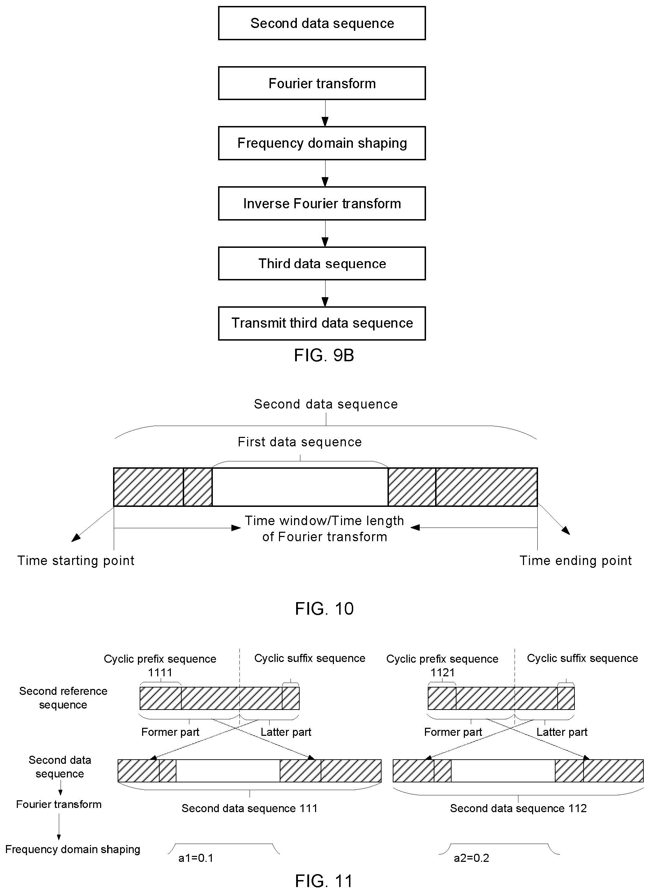

In some embodiments, a length of a time window used in the Fourier transform processing is equal to a time length of the second data sequence. Exemplarily, as shown in FIG. 10, a time starting point of the time window used in the Fourier transform processing is a time starting point of the second data sequence, and a time ending point of the time window used in the Fourier transform processing is a time ending point of the second data sequence, that is, the length of the time window used in the Fourier transform processing is equal to the time length of the second data sequence.

In some embodiments, a number of calculation points used in the Fourier transform processing is equal to a number of elements of the second data sequence. In some embodiments, a number of calculation points used in the inverse Fourier transform processing is greater than a number of calculation points used in the Fourier transform processing.

In some embodiments, a number of elements of the third data sequence is greater than a number of elements of the second data sequence.

It will be noted that the number of the calculation points used in the Fourier transform (such as DFT) processing is equal to the number of the elements of the second data sequence, and the number of the calculation points used in the inverse Fourier transform (such as IFFT) processing is greater than the number of the calculation points used in the Fourier transform (such as DFT) processing, that is, zero subcarriers are added to frequency domain data obtained after performing the Fourier transform on the second data sequence, and then an oversampled inverse Fourier transform is performed, therefore, the number of the elements of the obtain third data sequence is greater than the number of the elements of the second data sequence.

In another implementation, the sending end may perform Fourier transform processing, frequency domain shaping processing, and inverse Fourier transform processing on the second data sequence, to obtain the third data sequence.

Exemplarily, As shown in FIG. 9B, after having determined the second data sequence, the sending end may first perform Fourier transform processing on the second data sequence, then perform frequency domain spectrum shaping (FDSS) processing on the second data sequence processed by the Fourier transform, and then perform inverse Fourier transform processing, to obtain the third data sequence. Furthermore, the sending end may transmit the obtained third data sequence.

In some embodiments, a magnitude of a coefficient in a root-raised cosine function used in the frequency domain shaping processing is negatively correlated with a length of the cyclic prefix sequence determined based on the first reference sequence.

In some embodiments, a magnitude of a coefficient in a root-raised cosine function used in the frequency domain shaping processing is negatively correlated with a length of the cyclic suffix sequence determined based on the first reference sequence.

Exemplarily, as shown in FIG. 11, for a second data sequence 111, a roll-off factor of the root-raised cosine function used for the frequency domain shaping processing is a1, and a1 = 0.1; and for a second data sequence 112, a roll-off factor of the root-raised cosine function used for the frequency domain shaping processing is a2, and a1 = 0.2. Furthermore, a length of a cyclic prefix sequence 1111 in the second data sequence 111 is greater than a length of a cyclic prefix sequence 1121 in the second data sequence 112. It can be seen that the length of the cyclic prefix sequence of the first reference sequence decreases monotonically as the roll-off factor increases.

In S105, the third data sequence is sent.

In some embodiments, the sending end may transmit the third data sequence to the receiving end on a defined time-frequency resource.

In some embodiments, the sending end may further send indication information to the receiving end.

The indication information is used to indicate a length of the cyclic prefix sequence and/or a length of the cyclic suffix sequence.

Based on the communication method provided in the embodiments of the present disclosure, a data sequence to be transmitted may be processed based on a reference sequence, such that a tail of the former symbol and a head of the latter symbol in two adjacent time domain symbols may form a complete second reference sequence. In this way, channel estimation may be performed based on the acquired complete second reference sequence at an interval of every reception of a time domain symbol, thereby updating channel estimation parameters in a timely manner and improving the accuracy of the channel estimation, as well as being suitable for high-speed mobile scenarios. Furthermore, the cyclic prefix CP and the cyclic suffix CS may be added to the head and tail of the first reference sequence, respectively, so that there is cyclic protection data at both the beginning and ending of the first reference sequence, thereby reducing interference from adjacent data, and suppressing multipath effects, so as to facilitate channel estimation based on the first reference sequence.

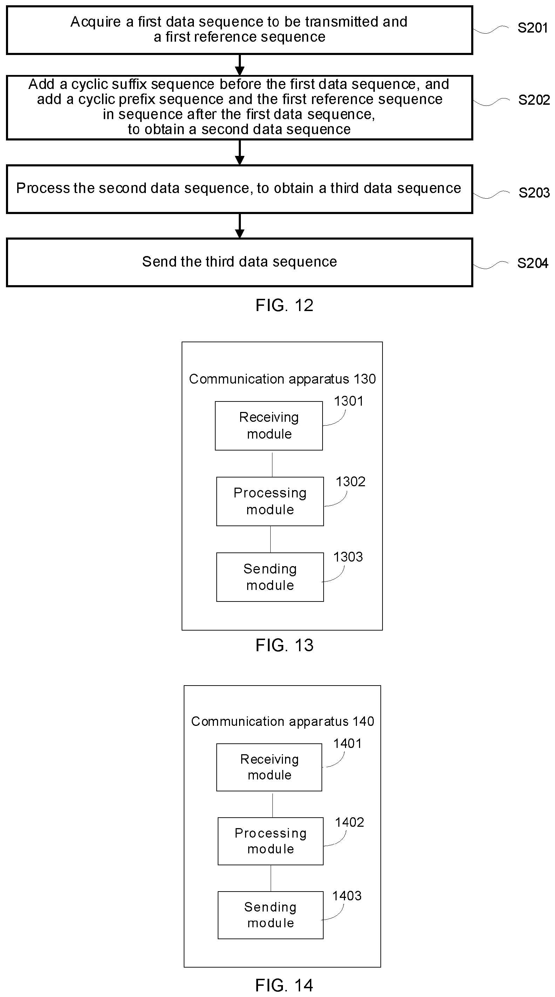

In some embodiments, as shown in FIG. 12, the embodiments of the present disclosure further provide another communication method, and the method includes the following steps (S201 to S204).

In S201, a first data sequence to be transmitted and a first reference sequence are acquired.

A detailed description for S201 may be referred to the description for S101 above, which will not be repeated here.

In S202, a cyclic suffix sequence is added before the first data sequence, and a cyclic prefix sequence and the first reference sequence are added in sequence after the first data sequence, to obtain a second data sequence.

The cyclic prefix sequence and the cyclic suffix sequence are determined based on the first reference sequence. In some embodiments, the cyclic prefix sequence may include a tail end of the first reference sequence, and the cyclic suffix sequence may include a head end of the first reference sequence. Furthermore, a length of the cyclic prefix sequence is greater than or equal to a length of the cyclic suffix sequence.

In some embodiments, a length of the cyclic prefix sequence is greater than or equal to a length of the cyclic suffix sequence.

A detailed description for the cyclic prefix sequence and the cyclic suffix sequence may be referred to the description for S102 above, which will not be repeated here.

In some embodiments, the sending end may place the cyclic prefix sequence before the first reference sequence, then place the cyclic prefix sequence and the first reference sequence after the first data sequence, and place the cyclic suffix sequence before the first data sequence, and finally use a combined sequence of the cyclic suffix sequence, the first data sequence, the cyclic prefix sequence, and the first reference sequence as the second data sequence.

In S203, the second data sequence is processed, to obtain a third data sequence.

In some embodiments, the sending end may perform Fourier transform processing and inverse Fourier transform processing on the second data sequence, to obtain the third data sequence.

In some embodiments, a length of a time window used in the Fourier transform processing is equal to a time length of the second data sequence. In some embodiments, a number of calculation points used in the inverse Fourier transform processing is greater than a number of calculation points used in the Fourier transform processing. In some embodiments, a time length of the third data sequence is equal to a time length of the second data sequence.

A detailed description for S203 may be referred to the description for S104 above, which will not be repeated here.

In S204, the third data sequence is sent.

In some embodiments, the sending end may further send indication information to the receiving end.

The indication information is used to indicate a length of the cyclic prefix sequence and/or a length of the cyclic suffix sequence.

A detailed description for S204 may be referred to the description for S105 above, which will not be repeated here.

Based on the communication method provided by the embodiments of the present disclosure, the update speed of channel estimation parameters and the accuracy of channel estimation in high-speed mobile scenarios may be improved. Furthermore, by directly adding the cyclic prefix sequence, the first reference sequence and the cyclic suffix sequence to the first data sequence to obtain the second data sequence, the operation is more direct and convenient, which may reduce the complexity of the data transmission processing.

The foregoing mainly introduces the solutions provided in the present disclosure from the perspective of interaction between various devices or nodes. It can be understood that in order to implement the above functions, various devices or nodes include corresponding hardware structures and/or software modules for implementing various functions. Those skilled in the art should easily realize that in combination with algorithms and steps described in the embodiments disclosed herein, the present disclosure is capable of being implemented in the form of hardware or a combination of hardware and computer software. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

FIG. 13 is a schematic diagram of the composition of a communication apparatus according to some embodiments. As shown in FIG. 13, a communication apparatus 130 includes a receiving module 1301, a processing module 1302, and a sending module 1303.

In some embodiments, the receiving module 1301 is configured to acquire a first data sequence to be transmitted and a first reference sequence. The processing module 1302 is configured to add a cyclic prefix sequence and a cyclic suffix sequence to the first reference sequence, to obtain a second reference sequence. The processing module 1302 is further configured to place a latter part of the second reference sequence before the first data sequence, and place a former part of the second reference sequence after the first data sequence, to obtain a second data sequence, and to process the second data sequence, to obtain a third data sequence. The sending module 1303 is configured to send the third data sequence.

In some embodiments, a length of the former part of the second reference sequence is greater than or equal to a length of the latter part of the second reference sequence.

In some embodiments, the former part of the second reference sequence includes the cyclic prefix sequence and the first reference sequence, and the latter part of the second reference sequence includes the cyclic suffix sequence.

In some embodiments, the former part of the second reference sequence includes the cyclic prefix sequence and a former part of the first reference sequence, and the latter part of the second reference sequence includes a latter part of the first reference sequence and the cyclic suffix sequence.

In some embodiments, a length of the cyclic prefix sequence is greater than or equal to a length of the cyclic suffix sequence.

In some embodiments, a length of the former part of the second reference sequence is positively correlated with a length of the cyclic prefix sequence.

In some embodiments, a sum of a length of the second reference sequence and a length of the first data sequence is equal to a length of a time domain symbol.

In some embodiments, the cyclic prefix sequence includes a tail-end element of the first reference sequence, and the cyclic suffix sequence includes a head-end element of the first reference sequence.

In some embodiments, the second data sequence is a data sequence carried in a time domain symbol.

In some embodiments, in a first time domain symbol and a second time domain symbol that are adjacent, a first reference sequence carried in the first time domain symbol is the same as a first reference sequence carried in the second time domain symbol, a head-end element of a second data sequence carried in the first time domain symbol is the same as a head-end element of a second data sequence carried in the second time domain symbol, and a tail-end element of the second data sequence carried in the first time domain symbol is the same as a tail-end element of the second data sequence carried in the second time domain symbol.

In some embodiments, in a first time domain symbol and a second time domain symbol that are adjacent, a first reference sequence carried in the first time domain symbol is the same as a first reference sequence carried in the second time domain symbol, and a second reference sequence carried in the first time domain symbol is different from a second reference sequence carried in the second time domain symbol.

In some embodiments, a length of a cyclic prefix sequence in the first time domain symbol is unequal to a length of a cyclic prefix sequence in the second time domain symbol, and/or a length of a cyclic suffix sequence in the first time domain symbol is unequal to a length of a cyclic suffix sequence in the second time domain symbol.

In some embodiments, first reference sequences carried in all time domain symbols within a time slot are the same, head-end elements of second data sequences carried in all time domain symbols within the time slot are the same, and tail-end elements of the second data sequences carried in all time domain symbols are the same.

In some embodiments, in a first time slot and a second time slot that are adjacent, a first reference sequence carried in each time domain symbol in the first time slot is the same as a first reference sequence carried in each time domain symbol in the second time slot, and a second reference sequence carried in each time domain symbol in the first time slot is different from a second reference sequence carried in each time domain symbol in the second time slot.

In some embodiments, a length of a cyclic prefix sequence of each time domain symbol in the first time slot is unequal to a length of a cyclic prefix sequence of each time domain symbol in the second time slot, and/or a length of a cyclic suffix sequence of each time domain symbol in the first time slot is unequal to a length of a cyclic suffix sequence of each time domain symbol in the second time slot.

In some embodiments, the processing module 1302 is configured to perform Fourier transform processing and inverse Fourier transform processing on the second data sequence, to obtain the third data sequence.

In some embodiments, the processing module 1302 is configured to perform Fourier transform processing, frequency domain shaping processing, and inverse Fourier transform processing on the second data sequence, to obtain the third data sequence.

In some embodiments, a length of a time window used in the Fourier transform processing is equal to a time length of the second data sequence.

In some embodiments, a number of calculation points used in the Fourier transform processing is equal to a number of elements of the second data sequence.

In some embodiments, a time length of the third data sequence is equal to a time length of the second data sequence.

In some embodiments, a number of calculation points used in the inverse Fourier transform processing is greater than a number of calculation points used in the Fourier transform processing.

In some embodiments, a number of elements of the third data sequence is greater than a number of elements of the second data sequence.

In some embodiments, a magnitude of a coefficient in a root-raised cosine function used in the frequency domain shaping processing is negatively correlated with a length of the cyclic prefix sequence determined based on the first reference sequence.

In some embodiments, a magnitude of a coefficient in a root-raised cosine function used in the frequency domain shaping processing is negatively correlated with a length of the cyclic suffix sequence determined based on the first reference sequence.

In some embodiments, the sending module 1303 is further configured to send indication information, where the indication information is used to indicate a length of the cyclic prefix sequence and/or a length of the cyclic suffix sequence.

More detailed descriptions for the receiving module 1301, the processing module 1302 and the sending module 1303 mentioned above, as well as more detailed descriptions for various technical features and descriptions for beneficial effects may be referred to the corresponding method embodiments above, which will not be repeated here.

FIG. 14 is a schematic diagram of the composition of another communication apparatus according to some embodiments. As shown in FIG. 14, a communication apparatus 140 includes a receiving module 1401, a processing module 1402, and a sending module 1403.

In some embodiments, the receiving module 1401 is configured to acquire a first data sequence to be transmitted and a first reference sequence. The processing module 1402 is used to add a cyclic suffix sequence before the first data sequence, and add a cyclic prefix sequence and the first reference sequence in sequence after the first data sequence, to obtain a second data sequence, where the cyclic prefix sequence and the cyclic suffix sequence are determined based on the first reference sequence. The processing module 1402 is further configured to process the second data sequence, to obtain a third data sequence. The sending module 1403 is configured to send the third data sequence.

In some embodiments, a length of the cyclic prefix sequence is greater than or equal to a length of the cyclic suffix sequence.

In some embodiments, the processing module 1402 is configured to perform Fourier transform processing and inverse Fourier transform processing on the second data sequence, to obtain the third data sequence.

In some embodiments, a length of a time window used in the Fourier transform processing is equal to a time length of the second data sequence. In some embodiments, a number of calculation points used in the inverse Fourier transform processing is greater than a number of calculation points used in the Fourier transform processing. In some embodiments, a time length of the third data sequence is equal to a time length of the second data sequence.

In some embodiments, the sending module 1403 is further configured to send indication information, where the indication information is used to indicate a length of the cyclic prefix sequence and/or a length of the cyclic suffix sequence.

More detailed descriptions for the receiving module 1401, the processing module 1402 and the sending module 1403 mentioned above, as well as more detailed descriptions for various technical features and descriptions for beneficial effects may be referred to the corresponding method embodiments above, which will not be repeated here.

It will be noted that the modules in FIG. 13 or FIG. 14 may also be referred to as units, for example, the receiving module may be referred to as a receiving unit. In addition, in the embodiments shown in FIG. 13 or FIG. 14, names of various modules may not be names shown in the figures, for example, the sending module may also be referred to as a communication module, and the receiving module may also be referred to as a communication module.

If various units or modules in FIG. 13 or FIG. 14 are implemented in the form of software functional modules, and sold or used as independent products, they may be stored in a computer-readable storage medium. Based on this understanding, the technical solutions of the present disclosure may be essentially, or a part of the technical solutions of the present disclosure that contributes to the prior arts, or all or a portion of the technical solutions of the present disclosure may be, embodied in the form of a software product, and the computer software product is stored in a storage medium including couples of instructions, to enable a computer device (which may be a personal computer, a server, or a network device) or a processor to perform all or part of steps of the method in various embodiments of the present disclosure. The storage media for storing a computer software product include: various types of media capable of storing program codes, such as a USB flash drive, a mobile disk, a read-only memory (ROM), a random-access memory (RAM), a magnetic disk, or an optical disk.

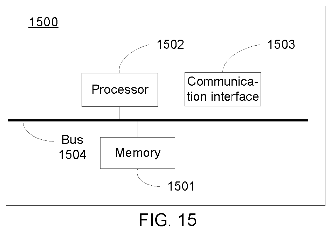

In a case of implementing the functions of the integrated module mentioned above in the form of hardware, the embodiments of the present disclosure provide a schematic diagram of the structure of a communication apparatus. As shown in FIG. 15, the communication apparatus 1500 includes: a processor 1502, a communication interface 1503, and a bus 1504. In some embodiments, the communication apparatus 1500 may further include a memory 1501.

The processor 1502 may implement or perform various exemplary logical blocks, modules and circuits described in conjunction with contents of the present disclosure. The processor 1502 may be a central processor, a general-purpose processor, a digital signal processor, an application specific integrated circuit, a field programmable gate array or other programmable logic component, a transistor logic component, a hardware assembly, or any combination thereof. The processor 1502 may implement or perform various exemplary logical blocks, modules and circuits described in conjunction with the contents of the present disclosure. The processor 1502 may also be a combination that implements computing functions, such as a combination containing one or more microprocessors, and a combination of a DSP (digital signal processor) and a microprocessor.

The communication interface 1503 is configured to connect to other devices through a communication network. The communication network may be the Ethernet, a radio access network, a wireless local area networks (WLAN), or the like.

The memory 1501 may be a read-only memory (ROM) or other types of static storage devices capable of storing static information and instructions, a random-access memory (RAM) or other types of dynamic storage devices capable of storing dynamic information and instructions, an electrically erasable programmable read-only memory (EEPROM), a magnetic disk storage medium or other magnetic storage devices, or any other medium capable of being used to carry or store desired program codes with instructions or a form of data structure, and accessible by a computer, which is not limited thereto.

As an implementation, the memory 1501 may exist independently from the processor 1502, and the memory 1501 may be connected to the processor 1502 through the bus 1504, for storing instructions or program codes. When invoking and executing the instructions or program codes stored in the memory 1501, the processor 1502 is capable of implementing the information processing mode determination method provided in the embodiments of the present disclosure.

In another implementation, the memory 1501 may be integrated with the processor 1502.

The bus 1504 may be an extended industry standard architecture (EISA) bus. The bus 1504 may be classified as an address bus, a data bus, or a control bus. For ease of representation, only one bold line is used in FIG. 15 for representing the bus 1504, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions may be allocated to different functional modules according to requirements, that is, the internal structure of a device or apparatus may be divided into different functional modules, to complete all or part of the functions described above.

The embodiments of the present disclosure further provide a computer-readable storage medium. All or part of the processes in the above method embodiments may be implemented by relevant hardware instructed by computer instructions. A program may be stored in the computer-readable storage medium, and when executed, the program may include the processes in the above method embodiments. The computer-readable storage medium may be an internal storage in any one of the foregoing embodiments. The above-mentioned computer-readable storage medium may also be an external storage device of the above-mentioned device or apparatus, such as a plug-in hard disk, a smart media card (SMC), a secure digital (SD) card, or a flash card, equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer program and other programs and data required by the above-mentioned device or apparatus. The above-mentioned computer-readable storage medium may further be configured to temporarily store data that has been output or is to be output.

The embodiments of the present disclosure further provide a computer program product. The computer product includes computer programs that, upon being run on a computer, enable the computer to perform any method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, wordings "comprise/comprises/comprising" do not exclude other components or steps, and wordings "a/an" and "one" do not exclude a case of plurality. A single processor or other units may implement couples of functions listed in the claims. Some measures are stated in different dependent claims, but it does not mean that these measures cannot be combined to produce good effects.

Although the present disclosure is described in conjunction with specific features and embodiments thereof, obviously, various modifications and combinations may be made thereto without departing from the spirit and scope of the present disclosure. Accordingly, the specification and accompanying drawings herein are merely exemplary illustration of the present disclosure defined by the claims, and are deemed to cover any and all modifications, variations, combinations, or equivalents within the scope of the present disclosure. Obviously, those skilled in the art can make various modifications and variations to the present disclosure without departing from the spirit and scope of the present disclosure. In this way, if these modifications and variations in the present disclosure fall within the scope of the claims and their equivalent technologies of the present disclosure, then the present disclosure is also intended to include these modifications and variations.

The above descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A communication method, **characterized by** comprising:
acquiring a first data sequence to be transmitted and a first reference sequence;
adding a cyclic prefix sequence and a cyclic suffix sequence to the first reference sequence, to obtain a second reference sequence;
placing a latter part of the second reference sequence before the first data sequence, and placing a former part of the second reference sequence after the first data sequence, to obtain a second data sequence;
processing the second data sequence, to obtain a third data sequence; and
sending the third data sequence.

2. The method according to claim 1, wherein a length of the former part of the second reference sequence is greater than or equal to a length of the latter part of the second reference sequence.

3. The method according to claim 1, wherein the former part of the second reference sequence comprises the cyclic prefix sequence and the first reference sequence, and the latter part of the second reference sequence comprises the cyclic suffix sequence.

4. The method according to claim 1, wherein the former part of the second reference sequence comprises the cyclic prefix sequence and a former part of the first reference sequence, and the latter part of the second reference sequence comprises a latter part of the first reference sequence and the cyclic suffix sequence.

5. The method according to claim 1, wherein a length of the cyclic prefix sequence is greater than or equal to a length of the cyclic suffix sequence.

6. The method according to claim 1, wherein a length of the former part of the second reference sequence is positively correlated with a length of the cyclic prefix sequence.

7. The method according to claim 1, wherein a sum of a length of the second reference sequence and a length of the first data sequence is equal to a length of a time domain symbol.

8. The method according to claim 1, wherein the cyclic prefix sequence comprises a tail-end element of the first reference sequence, and the cyclic suffix sequence comprises a head-end element of the first reference sequence.

9. The method according to claim 1, wherein the second data sequence is a data sequence carried in a time domain symbol.

10. The method according to claim 1, wherein in a first time domain symbol and a second time domain symbol that are adjacent, a first reference sequence carried in the first time domain symbol is same as a first reference sequence carried in the second time domain symbol, a head-end element of a second data sequence carried in the first time domain symbol is same as a head-end element of a second data sequence carried in the second time domain symbol, and a tail-end element of the second data sequence carried in the first time domain symbol is same as a tail-end element of the second data sequence carried in the second time domain symbol.

11. The method according to claim 1, wherein in a first time domain symbol and a second time domain symbol that are adjacent, a first reference sequence carried in the first time domain symbol is same as a first reference sequence carried in the second time domain symbol, and a second reference sequence carried in the first time domain symbol is different from a second reference sequence carried in the second time domain symbol.

12. The method according to claim 11, wherein a length of a cyclic prefix sequence in the first time domain symbol is unequal to a length of a cyclic prefix sequence in the second time domain symbol, and/or a length of a cyclic suffix sequence in the first time domain symbol is unequal to a length of a cyclic suffix sequence in the second time domain symbol.

13. The method according to claim 1, wherein first reference sequences carried in all time domain symbols within a time slot are same, head-end elements of second data sequences carried in all time domain symbols within the time slot are same, and tail-end elements of the second data sequences carried in all time domain symbols are same.

14. The method according to claim 1, wherein in a first time slot and a second time slot that are adjacent, a first reference sequence carried in each time domain symbol in the first time slot is same as a first reference sequence carried in each time domain symbol in the second time slot, and a second reference sequence carried in each time domain symbol in the first time slot is different from a second reference sequence carried in each time domain symbol in the second time slot.

15. The method according to claim 14, wherein a length of a cyclic prefix sequence of each time domain symbol in the first time slot is unequal to a length of a cyclic prefix sequence of each time domain symbol in the second time slot, and/or a length of a cyclic suffix sequence of each time domain symbol in the first time slot is unequal to a length of a cyclic suffix sequence of each time domain symbol in the second time slot.

16. The method according to claim 1, wherein the processing the second data sequence, to obtain a third data sequence, comprises:
performing Fourier transform processing and inverse Fourier transform processing on the second data sequence, to obtain the third data sequence.

17. The method according to claim 1, wherein the processing the second data sequence, to obtain a third data sequence, comprises:
performing Fourier transform processing, frequency domain shaping processing, and inverse Fourier transform processing on the second data sequence, to obtain the third data sequence.

18. The method according to claim 16 or 17, wherein a length of a time window used in the Fourier transform processing is equal to a time length of the second data sequence.

19. The method according to claim 16 or 17, wherein a number of calculation points used in the Fourier transform processing is equal to a number of elements of the second data sequence.

20. The method according to claim 16 or 17, wherein a time length of the third data sequence is equal to a time length of the second data sequence.

21. The method according to claim 16 or 17, wherein a number of calculation points used in the inverse Fourier transform processing is greater than a number of calculation points used in the Fourier transform processing.

22. The method according to claim 21, wherein a number of elements of the third data sequence is greater than a number of elements of the second data sequence.

23. The method according to claim 17, wherein a magnitude of a coefficient in a root-raised cosine function used in the frequency domain shaping processing is negatively correlated with a length of the cyclic prefix sequence determined based on the first reference sequence.

24. The method according to claim 17, wherein a magnitude of a coefficient in a root-raised cosine function used in the frequency domain shaping processing is negatively correlated with a length of the cyclic suffix sequence determined based on the first reference sequence.

25. The method according to claim 1, further comprising:
sending indication information, the indication information being used to indicate a length of the cyclic prefix sequence and/or a length of the cyclic suffix sequence.

26. A communication method, **characterized by** comprising:
acquiring a first data sequence to be transmitted and a first reference sequence;
adding a cyclic suffix sequence before the first data sequence, and adding a cyclic prefix sequence and the first reference sequence in sequence after the first data sequence, to obtain a second data sequence, wherein the cyclic prefix sequence and the cyclic suffix sequence are determined based on the first reference sequence;
processing the second data sequence, to obtain a third data sequence; and
sending the third data sequence.

27. The method according to claim 26, wherein a length of the cyclic prefix sequence is greater than or equal to a length of the cyclic suffix sequence.

28. The method according to claim 26, wherein the processing the second data sequence, to obtain a third data sequence, comprises:
performing Fourier transform processing and inverse Fourier transform processing on the second data sequence, to obtain the third data sequence.

29. The method according to claim 28, wherein a length of a time window used in the Fourier transform processing is equal to a time length of the second data sequence.

30. The method according to claim 28, wherein a number of calculation points used in the inverse Fourier transform processing is greater than a number of calculation points used in the Fourier transform processing.

31. The method according to claim 26, wherein a time length of the third data sequence is equal to a time length of the second data sequence.

32. The method according to claim 26, further comprising:
sending indication information, the indication information being used to indicate a length of the cyclic prefix sequence and/or a length of the cyclic suffix sequence.

33. A communication apparatus, **characterized by** comprising: a memory and a processor, wherein the memory is coupled to the processor, the memory is configured to store instructions executable by the processor, and the processor, upon executing the instructions, performs the method according to any one of claims 1 to 32.

34. A computer-readable storage medium, **characterized in that** the computer-readable storage medium has stored thereon computer instructions that, upon being run on a communication apparatus, enable the communication apparatus to perform the method according to any one of claims 1 to 32.
